Europäisches Patentamt

European Patent Office

Office européen des brevets

(11) Veröffentlichungsnummer: **0 378 781**

**A1**

(12) **EUROPÄISCHE PATENTANMELDUNG**

(21) Anmeldenummer: **89121405.8**

(22) Anmeldetag: **18.11.89**

(51) Int. Cl.5: **G01B 11/24**

(30) Priorität: **17.01.89 DE 3901185**

(43) Veröffentlichungstag der Anmeldung:
**25.07.90 Patentblatt 90/30**

(84) Benannte Vertragsstaaten:
**AT DE FR GB IT**

(71) Anmelder: **LINSINGER MASCHINENBAU GMBH**
**Dr. Linsingerstrasse 24**
**A-4662 Steyrermühl(AT)**

(72) Erfinder: **Pomikascek, Josef Dipl.-Ing.**
**Bahnhofstrasse 10**
**A-4813 Altmünster(AT)**

(74) Vertreter: **Hafner, Dieter, Dr.rer.nat.,**
**Dipl.-Phys.**
**Ostendstrasse 132**
**D-8500 Nürnberg 30(DE)**

(54) **Verfahren sowie Vorrichtung zur berührungslosen Messung der Deformation und des Verschleisses von Schienen; Verfahren zur Messung der Spurweite an Schienen.**

(57) Die vorliegende Erfindung betrifft ein Verfahren sowie eine Vorrichtung zur berührungslosen Messung des Verschleisses und der Deformation von Schienen. Hierbei wird der Schienenkopf unter Erzeugung eines Lichtstreifens (5) belichtet und entlang einer vorgegebenen Meßstrecke bewegt. Entlang dieser vorgegebenen Meßstrecke erfolgt eine videotechnische Abtastung des Lichtstreifens (5). Das tatsächliche Schienenprofil wird durch Vergleich der abgetasteten Signale mit einer vorgegebenen Charakteristik ermittelt. Zur Durchführung dieses Verfahrens dient eine ortsfest mit einem Schienenfahrzeug (1) verbundene Belichtungseinheit (4) zur Belichtung des Schienenkopfs in Form eine Lichtstreifens (5). Die Abtastung des Lichtstreifens (5) erfolgt über eine fest mit dem Schienenfahrzeug (1) in Verbindung stehende Videokamera (6). Die Ermittlung des tatsächlichen Schienenprofils aus den von der Videokamera (6) erfaßten Bild- Wegsignale erfolgt über eine Rechner (9,) - gestützte Auswertungseinheit 10

FIG.1

## Verfahren sowie Vorrichtung zur berührungslosen Messung der Deformation und des Verschleisses von Schienen; Verfahren zur Messung der Spurweite an Schienen

Die Erfindung betrifft ein Verfahren sowie eine Vorrichtung zur berührungslosen Messung der Deformation und des Verschleisses von Schienen. Die Erfindung betrifft ferner eine Verfahren und eine Vorrichtung zur Messung der Spurweite an Schienen.

Die verschleißbeanspruchte Zone an Schienen liegt im Kopfbereich der Schiene, insbesondere an der Oberseite sowie an der Innenseite, d. h., an der dem Schienenfahrzeug zugewandten Seite des Schienenkopfs (Fahrkante). Der Zustand einer Schiene kann mit der Profilform der Oberkante und der Fahrkante sowie mit der Schienenkopfhöhe gekennzeichnet werden.

Bisher werden zur Durchführung von Messungen des Verschleisses sowie der Deformation von Schienen mechanische Abtastsysteme verwendet, welche einerseits eine relativ schlechte Reproduktion des Zustandes der Schienen erlauben sowie andererseits üblicherweise nur in einem ruhenden Zustand funktionsfähig sind. Zur Auswertung einer Strecke wird hierdurch eine Vielzahl von representativen Meßstellen erforderlich, was einen hohen Zeit- und Kostenaufwand bedingt.

Ein Ziel der vorliegenden Erfindung ist es, ein Verfahren sowie eine Vorrichtung zur berührungslosen Messung der Deformation und des Verschleisses von Schienen zu schaffen, wodurch eine besonders schnelle Messung mit hoher Genauigkeit durchgeführt werden kann.

Dieses Ziel wird durch folgende Schritte gelöst:
Belichtung des Schienenkopfs unter Erzeugung eines Lichtsflecks,
Bewegung des Lichtflecks entlang einer vorgegebenen Meßstrecke,
videotechnische Abtastung des Lichtstreifens entlang der Meßstrecke,
Vergleich der abgetasteten Signale mit einer vorgegebenen Charakteristik.

Diese technische Lehre ermöglicht es, eine Messung des Zustands von Schienen von einem sich bewegenden Schienenfahrzeug aus zu tätigen, was eine erhebliche Zeit- und Kosteneinsparung mitsich bringt. Darüber hinaus wird durch das erfindungsgemäße Verfahren gewährleistet, daß die vollständige Oberfläche des zu prüfenden Schienenabschnitts abgetastet wird, wodurch nunmehr auch Mängel feststellbar sind, die beim konventionellen Verfahren eventuell übersehen worden wären. Insofern erhöht das erfindungemäße Verfahren auch die Sicherheit einer Schienenstrecke.

Eine zweckmäßige Ausgestaltung des Verfahrens ist dadurch gekennzeichnet, daß der Schienenkopf an der Oberseite der Schiene sowie an der einem Schienenfahrzeug zugewandten Innenkante des Schienenkopf in Form eines weitgehend quer in Fahrtrichtung verlaufenden Lichtstreifens belichtet wird. Dies hat den Vorteil, daß ein derartig angeordneter Lichtstreifen in besonders wirksamer und gut abtastbarer Weise das Oberflächenprofil der zu prüfenden Schiene wiedergibt.

Gemäß einer weiteren zweckmäßigen Ausgestaltung des erfindungsgemäßen Verfahrens kann die Lage des Lichtstreifens einer festgelegten Schnittebene an der Schiene oder der Normalebene der Schiene entsprechen.

Eine weitere Ausgestaltung des erfindungsgemäßen Verfahrens dahingehend, daß die videotechnische Abtastung des Lichtstreifens mittels einer ortsfest an einem Schienenfahrzeug befestigten Kamera erfolgt, die Vorrichtung zur Erzeugung des Lichtstreifens ebenfalls ortsfest an dem Schienenfahrzeug befestigt ist und die Bewegung des Lichtstreifens entlang der Meßstrecke durch Bewegung des Schienenfahrzeugs erfolgt, beinhaltet den Vorteil, daß das erfindungsgemäße Meßverfahren mittels unspezifischer, üblicher Schienenfahrzeuge ausführbar ist.

Anspruch 5 zeigt eine weitere zweckmäßige Ausgestaltung des erfindungsgemäßen Verfahren. Um Fehler in der videotechnischen Abtastung des Lichtstreifens aufgrund der Anordnung der Videokamera zu vermeiden, wird gemäß einer zweckmäßigen Ausgestaltung des vorliegenden Verfahrens das tatsächliche Profil einer über die Videokamera erfaßten transformierten, d h. verzerrt dargestellten Profilform der Oberseite bzw. der Innenseite der Schiene rechnerisch ermittelt werden. Hierdurch können aufgrund der Anordnung der Videokamera bedingte Verzerrungen der durch den Lichtstreifen gekennzeichneten Profilform vermieden werden.

Dadurch, daß gemäß einer weiteren zweckmäßigen Ausgestaltung des vorliegenden Verfahrens, die tatsächliche Profilform unter Berücksichtigung der durch die Bewegungen des Schienenfahrzeugs bedingten Änderungen der Höhen- und Seitenpositionen der Videokamera erfaßt und rechnerisch ermittelt wird, ergibt sich der Vorteil, daß bei Federungsbewegungen oder vertikalen Veränderungen der Lage des Schienenfahrzeugs die dadurch bedingten Meßabweichungen ausgeglichen werden können.

Die Änderung der Höhenposition der Videokamera kann zweckmäßigerweise mittels einer Einrichtung festgestellt werden, welche den Abstand eines ortsfest mit der Videokamera in Verbindung stehenden Fixpunktes zur Schiene, vorzugsweise zur Oberseite der Schiene abtastet. Diese zusätzliche Größe kann dann bei der rechnerischen Ermittlung der tatsächlichen Profilform berücksichtigt werden.

Die Ausgestaltung gemäß Anspruch 9 besitzt den Vorteil, daß die Änderungen der Höhenposition durch die Videokamera selbst erfolgen kann.

Die Unteransprüche 10 und 11 zeigen weitere, zweckmäßige Ausgestaltungen des erfindungsgemäßen Verfahrens, wobei im Falle des Verfahrens nach Anspruch 11 die Bestimmung der Änderung der horizontalen Lage der Videokamera in Bezug auf die Schiene ebenfalls im Blickfeld durch die Videokamera selbst erfolgt.

Das erfindungsgemäße Prinzip läßt sich in besonders wirksamer Weise auch zur Messung der Spurweite zweier ein Gleis bildender Schienen anwenden. Dadurch, daß mittels zweier symmetrisch angeordneter Videokameras zwei identische Blickfelder der beiden Schienenoberflächen erzeugt werden und Änderungen des Abstandes S1, S2 des Lichtstreifens von der jeweiligen Innenkante des Schienenkopfs zum parallelen Bildfeldrand des zugehörigen Blickfeldes festgestellt werden, läßt sich die Spur eines Gleisstrangs einfach und schnell prüfen. Der Gegenstand des Verfahrens nach Anspruch 12 wird auch isoliert beansprucht.

Die Messung der Spurweite läßt sich besonders einfach durchführen, wenn - gemäß einer weiteren Ausgestaltung des erfindungsgemäßen Verfahrens - der Abstand der inneren Ränder der Blickfelder der beiden Videokameras konstant gehalten wird.

Eine zweckmäßige Vorrichtung, insbesondere zur Durchführung des erfindungsgemäßen Verfahrens kennzeichnet sich darin, daß mindestens eine ortsfest mit einem Schienenfahrzeug verbundene Belichtungseinheit zur Belichtung des Schienenkopfs mindestens einer Schiene eines Gleises in Form eines Lichtstreifens, eine fest mit dem Schienenfahrzeug in Verbindung stehende Videokamera zur visuellen wegabhängigen Abtastung des Lichtstreifens sowie Mittel zur Auswertung der von der Videokamera ermittelten visuellen Signale vorgehen sind. Diese Vorrichtung besitzt den Vorteil, daß sie eine kontinuierliche Messung des Zustandes einer Schienenoberfläche ermöglicht, wobei die Vorrichtung lediglich mit einem Schienenfahrzeug gekoppelt zu werden braucht.

Die Mittel zur Auswertung der von der Videokamera ermittelten visuellen Signale umfassen zweckmäßiger Weise einen digitalen Weggeber zur wegabhängigen Zuordnung der visuellen Signale, einen Speicher zur Speicherung der aufgenommenen wegabhängigen, visuellen Signale, einen Rechner sowie ein Auswertungseinheit zur Verarbeitung der schienenspezifischen Informationen.

Zur Erhöhung der Meßgenauigkeit bzw. zur Vermeidung von Störeinflüssen ist eine zweckmäßige Ausgestaltung der erfindungsmäßigen Vorrichtung dadurch gekennzeichnet, daß Mittel zur Feststellung der Änderung der horizontalen Lage der Videokamera in Bezug auf die Schienenoberseite vorgesehen sind, deren Meßwerte der Auswertung der aufgenommenen visuellen Signale zugrunde gelegt werden. Hierdurch können störende Einflüsse aufgrund von Federungsbewegungen des Schienenfahrzeugs vermieden werden. Die Ausgestaltung gemäß Anspruch 17 besitzt den Vorteil, daß die Änderungen der horizontalen Lage durch die Videokamera selbst feststellbar sind.

Anstelle der Feststellung der Änderung der Höhenlage durch die Videokamera selbst, können ebensogut elektrische oder optische Entfernungssensoren Anwendung finden.

Weiterhin betreffen die Unteransprüche 20 - 22 zweckmäßige Ausgestaltungen der erfindungsgemäßen Vorrichtung, bei denen anstelle von oder zusätzlich zur Messung der Höhenlage auch eine Ermittlung der seitlichen Bewegung der Videokamera, welche ebenfalls durch die Bewegung des Schienenfahrzeugs bedingt sein kann, erfolgt.

Der Unteranspruch 23 betrifft eine Vorrichtung zur Messung der Spurweite an Schienen. Diese Vorrichtung hat den Vorteil, daß die Spurbestimmung über die beiden Blickfelder der zugehörigen Videokameras berührungslos durchgeführt werden kann.

Eine besonders einfache Auswertung der beiden Blickfelder ist - gemäß einer besonderen Ausgestaltung der Vorrichtung nach Unteranspruch 24 - dann gewährleistet, wenn der Abstand der inneren Ränder der Blickfelder der beiden Videokameras konstant ist.

Die Erfindung wird anhand eines Ausführungsbeispiels unter Bezugnahme auf die Zeichnungen nachstehend näher erläutert.

Es zeigen

Fig 1 die erfindungsgemäße Vorrichtung in stark vereinfachter, schematischer Darstellungsweise,

Fig. 2 ein Videokamera-Blickfeld unter Kennzeichnung der optischen Hilfssignale, und

Fig. 3 schematische Darstellung der Anordnung zweier Videokamera-Blickfelder zur Ermittlung von Spurabweichungen.

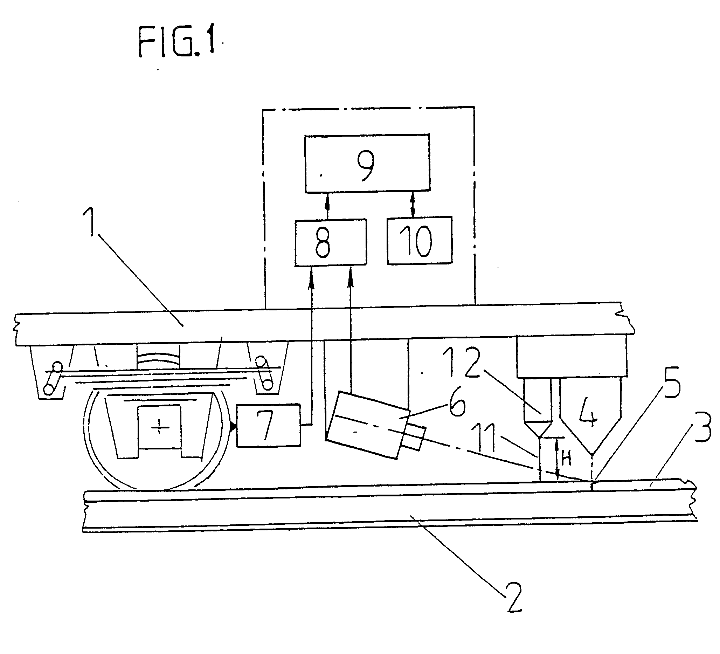

Die erfindungsgemäße Vorrichtung wird im folgenden anhand eines in Figur 1 dargestellten Schienenfahrzeugs 1 näher erläutert. Die Vorrichtung umfaßt eine Belichtungseinheit 4, welche mit dem Schienenfahrzeug 1 ortsfest verbunden ist. Die Belichtungseinheit 4 erzeugt einen weitgehend senkrecht zur Oberfläche der Schiene 2 gerichteten Lichtstrahl in Form eines kontraststarken Lichtstreifens 5. Dieser Lichtstreifen 5 belichtet sowohl die Oberseite des Schienenkopf als auch die Innenkante des Schienenkopfs, die auch als "Fahrkante" bezeichnet wird. Der Lichtstreifen verläuft weitgehend quer zur Fahrtrichtung d. h. zum Verlauf der Schiene.

Ferner weist das Schienenfahrzeug 1 eine fest mit diesem verbundene Videokamera 6 auf, deren Blickfeld oder optische Achse auf den Oberflächenbereich der Schiene, in dem der Lichtstreifen 5 sich befindet, gerichtet ist. Bezugszeichen 7 bezeichnet einen digitalen Weggeber, welcher die zurückgelegte Meßstrecke aufnimmt und dessen Werte den Abtastwerten der Videokamera zur Bildung von Bild-Wegsignalen nebengeordnet werden.

Nach der Durchführung der Messung werden die gespeicherten Informationen einer von einem Rechner 9 unterstützten Auswertungseinheit zugeführt und darin verarbeitet. Aufgrund der verschiedenen Anordnungsmöglichkeiten der Videokamera 6 kann die von der Videokamera 6 abgetastete Form des Lichtstreifens d. h. des Schienenprofils eine im Vergleich zum tatsächlichen Profil transformierte d. h. verzerrt dargestellte Form aufweisen. Die tatsächliche Form des Schienenprofils kann dann mittels des Rechners 9 ermittelt werden. Die Feststellung von erhöhten Verschleiß bzw. Deformationen der Lauffläche erfolgt in der Auswertungseinheit 10 durch Vergleich der ermittelten Bild-Wegsignale mit einer vorgegebenen Profilformcharakteristik.

Die Position der Videokamera 6 wird durch die Federungsbewegungen des Schienenfahrzeugs 1 unter gleichzeitiger Veränderung der Lage der optischen Achse und der Blickfeldposition verändert. Zur Erfassung dieser Änderungen wird ein optischen Hilfssignal 11 in Form eines sichtbaren Laserstrahls verwendet. Der Laserstrahl wird von einer ortsfest mit dem Schienenfahrzeug 1 verbundenen Strahlquelle 12 auf die Oberseite des Schienenkopfs gerichtet, wodurch eine Bezugshöhe H festgelegt werden kann.

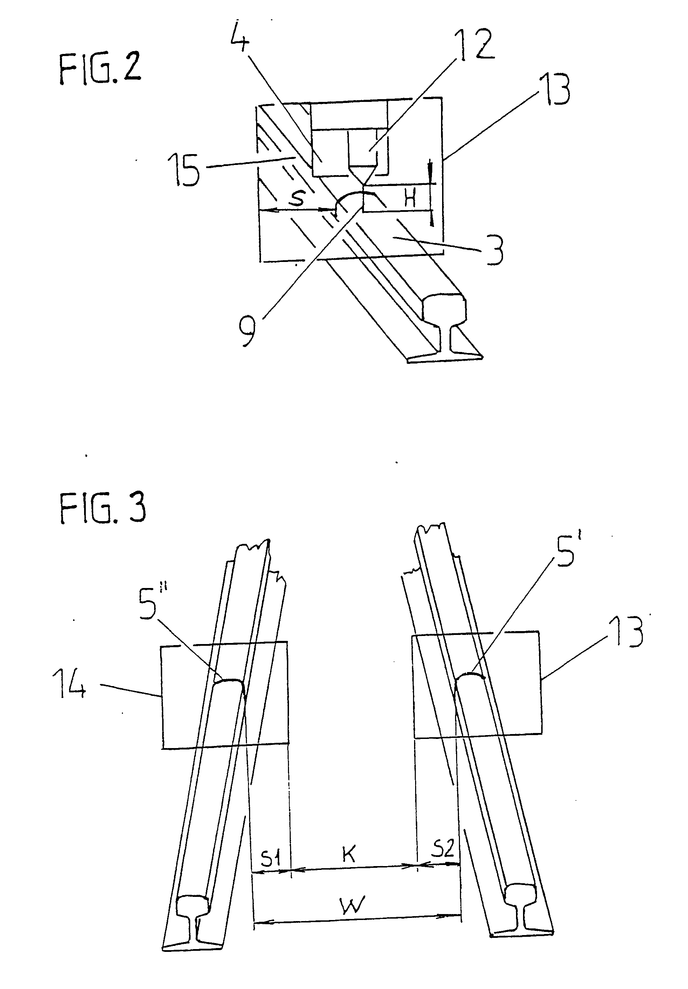

Anhand der Änderung der Bezugs- bzw. Pfeilhöhe H, d. h. der Änderung der Länge des von der Strahlquelle 12 auf die Oberseite der Schiene 3 gerichteten Laserstrahls 11 kann folglich eine Änderung der Höhenposition der Videokamera 6 in Bezug auf die Oberseite der Schiene 3 fest gestellt werden. Diese Feststellung der Änderung der Größe H erfolgt gemäß Fig. 2 im Blickfeld der Videokamera 6 durch die Videokamera 6 selbst. Die derart ermittelte Pfeilhöhe H wird zur rechnerischen Bestimmung des tatsächlichen Profils der Oberseite 3 der Schiene verwendet.

Figur 2 zeigt darüber hinaus auch die Möglichkeit der Ermittlung seitlicher Abweichungen der Schienenfahrzeugposition in Bezug zur Schiene, da auch seitliche Bewegungen des Schienenfahrzeugs 1 eine Verzerrung des von der Videokamera 6 erfaßten Schienenprofils verursachen. Zu diesem Zweck wird das Blickfeld 13 der Videokamera 6 als Bezugspunkt gewählt. Da die Entfernung zwischen der Videokamera 6 und dem Lichtstreifen 5 konstant ist, kann als Bezugsgröße die Entfernung des Lichtstreifens 5 an der Fahr- bzw. Innenkante 15 der Schiene und dem parallelen Blickfeldrand als Positionssignal verwendet werden. Dieser Abstand ist in Fig. 2 als S bezeichnet.

Auf diese Weise können die seitlichen Positionsänderungen über das Bild der Videokamera 6 der Bestimmung des tatsächlichen Profils der Lauffläche zugrunde gelegt werden.

Fig. 3 zeigt eine Anordnung zur Messung der Spurweite eines aus zwei Schienen 3 bestehenden Gleises. Diese Anordnung umfaßt zwei in Bezug auf das jeweilige Gleis 3 symmtrisch angeordnete Videokameras 6 zur Erzeugung je eines Blickfelds 13, 14 pro Schiene 3. Mittels je einer Belichtungseinheit 4, welche der in Fig. 1 gezeigten Belichtungseinheit entspricht, wird an der Oberseite 3 jeder Schiene im Bereich der beiden Blickfelder 13, 14 ein kontrastreicher Lichtstreifen $5'$, $5''$ erzeugt. Da die zur Schaffung der beiden Lichtstreifen $5'$, $5''$ vor gesehenen Belichtungseinheiten 4 sowie die beiden Videokameras 6 fest mit dem Schienenfahrzeug 1 verbunden sind, kann einerseits der Abstand der beiden inneren Ränder der Blickfelder 13, 14 der beiden Videokameras 6 als Konstante K vorgegeben werden, andererseits können die jeweiligen Abstände S1, S2 des Lichtstreifens $5'$, $5''$ an der Innenkante 15 der jeweiligen Schiene 3 zum jeweils dazugehörigen inneren Blickfeldrand zur Ermittlung der Änderung der Spurweite herangezogen werden. Die Spurweite W am Gleis kann folglich mittels folgender Beziehung

$$W = S1 + S2 + K$$

ermittelt werden.

BEZUGSZEICHENLISTE

1 Schienenfahrzeug
2 Schiene
3 Oberseite d. Schiene
4 Belichtungseinheit
5, $5'$, $5''$ Lichtstreifen
6 Videokamera
7 digitaler Weggeber
8 Speicher
9 Rechner
10 Auswertungseinheit
11 optisches Hilfssignal
12 Strahlquelle
13 Blickfeld
14 Blickfeld
15 Innenkante bzw. Fahrkante

**Ansprüche**

1. Verfahren zur berührungslosen Messung der Deformation und des Verschleisses mindestens einer Schiene, vorzugsweise beider Schienen eines Gleises, gekennzeichnet durch folgende Schritte:
Belichtung des Schienenkopfs unter Erzeugung eines Lichtflecks,
Bewegung des Lichtflecks entlang einer vorgegebenen Meßstrecke,
videotechnische Abtastung des Lichtflecks entlang der Meßstrecke, und
Vergleich der abgetasteten Signale mit einer vorgegebenen Charakteristik.

2. Verfahren nach Anspruch 1,
dadurch gekennzeichnet,
daß der Schienenkopf an der Oberseite (3) der Schiene (2) sowie an der einem Schienenfahrzeug zugewandten Kante (15) des Schienenkopfs in Form eines weitgehend quer zur Fahrtrichtung verlaufenden Lichtstreifens (5) belichtet wird.

3. Verfahren nach Anspruch 1 und/oder 2,
dadurch gekennzeichnet,
daß die Lage des Lichtstreifens einer festgelegten Schnittebene an der Schiene (2) oder der Normalebene der Schiene (2) entspricht.

4. Verfahren nach mindestens einem der vorhergehenden Ansprüche,
dadurch gekennzeichnet,
daß die videotechnische Abtastung des Lichtstreifens (5) mittels einer ortsfest an einem Schienenfahrzeug (1) befestigten Videokamera (6) erfolgt, die Vorrichtung zur Erzeugung des Lichtstreifens (5) ortsfest an dem Schienenfahrzeug (1) befestigt ist und die Bewegung des Licht streifens (5) entlang der Meßstrecke durch Bewegung des Schienenfahrzeugs (1) erfolgt.

5. Verfahren nach mindestens einem der vorhergehenden Ansprüche,
dadurch gekennzeichnet,
daß das von der Videokamera (6) abgetastete Bild des Lichtstreifens beim Überfahren der Meßstrecke den Wegsignalen eines digitalen Weggebers (7) zugeordnet wird, diese Bild-Wegsignale in einem Speicher (8) abgespeichert werden und die dem Speicher zugeführten Bild-Wegsignale mit Hilfe einer durch einen Rechner (9) unterstützten Auswertungseinheit (10) in schienenspezifische, wegabhängige Informationen verarbeitet werden.

6. Verfahren nach mindestens einem der vorhergehenden Ansprüche,
dadurch gekennzeichnet,
daß das tatsächliche Profil einer über die Videokamera (6) erfaßten transformierten Profilform der Oberseite (3) bzw. der Innenseite der Schiene ermittelt wird.

7. Verfahren nach mindestens einem der vorhergehenden Ansprüche,
dadurch gekennzeichnet,
daß die tatsächliche Profilform unter Berücksichtigung der durch die Bewegungen des Schienenfahrzeugs bedingten Änderungen der Höhen- und Seitenpositionen der Videokamera (6) erfaßt und rechnerisch ermittelt wird.

8. Verfahren nach Anspruch 7,
dadurch gekennzeichnet,
daß die Änderungen der Höhenposition der Videokamera (6) mittels einer Einrichtung, die den Abstand eines ortsfest mit der Videokamera (6) in Verbindung stehenden Fixpunktes zur Schiene, vorzugsweise zur Oberseite (3) der Schiene abtastet, festgestellt und bei der rechnerischen Ermittlung der tatsächlichen Profilform berücksichtigt werden.

9. Verfahren nach Anspruch 8,
dadurch gekennzeichnet,
daß die Änderungen der Höhenposition der Videokamera (6) von der Videokamera (6) selbst durch im Blickfeld der Kamera erfolgende Bestimmung der Änderung der Pfeilhöhe eines optischen Hilfssignals (11), welches durch einen Lichtstrahl, vorzugsweise Laserstrahl einer am Schienenfahrzeug (1) ortsfest befestigten Strahlquelle (12) erzeugt wird, festgestellt und bei der rechnerischen Ermittlung des tatsächlichen Schienenprofils berücksichtigt werden.

10. Verfahren nach mindestens einem der Ansprüche 7 - 9,
dadurch gekennzeichnet,
daß die Änderungen der horizontalen Lage der Videokamera (6) in Bezug zur zu prüfenden Schiene (2) mittels einer Einrichtung, die den Abstand eines ortsfest mit der Videokamera (6) in Verbindung stehenden Fixpunktes zur Schiene, vorzugsweise zur Seitenfläche der Schiene (2) ermittelt, festgestellt und bei der rechnerischen Ermittlung der tatsächlichen Profilform berücksichtigt werden.

11. Verfahren nach Anspruch 10,
dadurch gekennzeichnet,
daß die Änderungen der horizontalen Lage der Videokamera (6) in Bezug zur zu prüfenden Schiene von der Videokamera (6) selbst durch im Blickfeld der Videokamera (6) erfolgende Bestimmung der Änderung der Entfernung des Lichtstreifens (5) an der Innenkante (15) des Schienenkopfs zum parallelen Blickfeldrand festgestellt und bei der rechnerischen Ermittlung des tatsächlichen Schienenprofils berücksichtigt werden.

12. Verfahren insbesondere nach einem der Ansprüche 1 - 11,
dadurch gekennzeichnet,
daß zur Messung der Spurweite zweier ein Gleis bildender Schienen mittels zweier, symmtrisch angeordneter Videokameras (6) zwei identische Blickfelder (13, 14) der beiden Schienenoberflächen erzeugt werden und Änderungen des Abstands (S1, S2) des Lichstreifens (5) von der jeweiligen Innenkante des Schienenkopfs (15) zum parallelen Bildfeldrand des zugehörigen Blickfelds festgestellt werden.

13. Verfahren nach Anspruch 12,
dadurch gekennzeichnet,
daß der Abstand der inneren Ränder der Blickfelder (13, 14) der beiden Videokameras (6) konstant ist.

14. Vorrichtung zur berührungslosen Messung der Deformation und des Verschleisses von Schienen, insbesondere zur Durchführung eines Verfahrens mindestens gemäß einem der Ansprüche 11 - 13,
gekennzeichnet durch
mindestens eine ortsfest mit einem Schienenfahrzeug (1) verbundene Belichtungseinheit (4) zur Belichtung des Schienenkopfs mindestens einer Schiene eines Gleises in Form eines Lichtflecks vorzugsweise Lichtstreifens (5) ,
mindestens eine fest mit dem Schienenfahrzeug (1) in Verbindung stehende Videokamera (6) zur visuellen, wegabhängigen Abtastung des Lichtstreifens (5), und Mittel zur Auswertung der von der Videokamera (6) ermittelten visuellen Signale.

15. Vorrichtung nach Anspruch 14,
dadurch gekennzeichnet,
daß die Mittel zur Auswertung der von der Videokamera (6) ermittelten visuellen Signale einen digitalen Weggeber (7) zur wegabhängigen Zuordnung der visuellen Signale, einen Speicher (8) zur Speicherung der aufgenommenen wegabhängigen, visuellen Signale, einen Rechner (6) sowie eine Auswertungseinheit (10) zur Verarbeitung der schienenspezifischen Informationen, umfassen.

16. Vorrichtung nach Anspruch 14 und/oder 15,
dadurch gekennzeichnet,
daß Mittel zur Feststellung der Änderung der horizontalen Lage der Videokamera (6) in Bezug auf die Schienenoberseite vorgesehen sind, deren Meßwerte der Auswertung der aufgenommenen visuellen Signale zugrunde gelegt werden.

17. Vorrichtung nach Anspruch 16,
dadurch gekennzeichnet,
daß die Mittel zur Feststellung der Änderung der horizontalen Lage der Videokamera (6) eine ortsfest mit dem Schienenfahrzeug (1) verbundene Lichtstrahlquelle (12) umfassen, welche einen optisch sichtbaren Lichtstrahl auf die Schienenoberfläche richtet und Änderungen der Lage der Videokamera (6) zur Oberseite der Schiene (1) als Änderungen der Lage des Lichtstrahls im Blickfeld der Videokamera feststellbar und verwertbar sind.

18. Vorrichtung nach Anspruch 17,
dadurch gekennzeichnet,
daß der Lichtstrahl ein optisch sichtbarer Laserstrahl ist.

19. Vorrichtung nach Anspruch 16,
dadurch gekennzeichnet,
daß die Mittel zur Feststellung der Änderung der hozrizontalen Lage der Videokamera (6) einen elektrisch oder optisch arbeitenden Entfernungssensor umfassen.

20. Vorrichtung nach mindestens einem der vorhergehenden Ansprüche 14 - 18,
dadurch gekennzeichnet,
daß Mittel zur Feststellung einer seitlichen Bewegung der Videokamera (6) im Bezug zur Schiene (2) vorgesehen sind, deren Meßwerte der Auswertung der aufgenommenen visuellen Signale zugrunde gelegt werden.

21. Vorrichtung nach Anspruch 20,
dadurch gekennzeichnet,
daß durch die Videokamera (6) die Änderungen der Entfernung des Lichtstreifens (5) an der Innenkante (15) des Schienenkopfs hin zum parallelen Blickfeldrand im Blickfeld der Videokamera (6) ermittelbar und verwertbar sind.

22. Vorrichtung nach Anspruch 20,
dadurch gekennzeichnet,
daß ein elektrisch oder optisch wirkender Entfernungssensor vorgesehen ist.

23. Vorrichtung zur Messung der Spurweite an Schienen, insbesondere unter Verwendung der Vorrichtung gemäß mindestens einem der Ansprüche 14 - 22,
gekennzeichnet durch
mindestens eine ortfest mit dem Schienenfahrzeug (1) verbundene Belichtungseinheit (4) zur Erzeugung je eines Lichtstreifens (5′, 5″) an jeder der beiden Schienen, zwei symmetrisch angeordnete), mit dem Schienenfahrzeug (1) fest in Verbindung stehender Videokameras (6) zur Erzeugung zweier identischer, die beiden Lichtstreifen (5′,5″) erfassender Blickfelder (13, 14) wobei eine Spuränderung durch Ermittlung und Auswertung des Abstandes (S1, S2) des jeweiligen Lichtstreifens (5) von der jeweiligen Schiene, vorzugsweise von der Innenkante (15) der jeweiligen Schiene (2) zum zugehörigen parallelen Blickfeldrand des jeweiligen Blickfelds (13, 14) feststellbar ist.

24. Vorrichtung nach Anspruch 23,
dadurch gekennzeichnet,
daß der Abstand der inneren Ränder der Blickfelder (13, 14) der beiden Videokameras (6) konstant ist.

FIG.1

EP 0 378 781 A1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 087 592  (SPENO INTERNATIONAL S.A.) <br> * Zusammenfassung; Seite 4, Zeilen 5-16; Seite 7, Zeilen 29-34; Seiten 8-12; Figuren 1-3,6,7 * | 1-4,6 | G 01 B  11/24 |
| A | | 12,14, 23 | |
| A | US-A-4 653 316  (T. FUKUHARA) <br> * Zusammenfassung; Spalten 2-5; Anspruch 1; Figuren 1-3,8,9 * | 5,7-9, 15,22 | |
| A | US-A-4 198 164  (C. CANTOR) <br> * Zusammenfassung; Spalten 5,6; Figuren 1,3 * | 10-12, 16 | |
| A | EP-A-0 007 227  (COMMONWEALTH SCIENTIFIC AND INDUSTRIAL RESEARCH. ORGANIZATION) <br> * Zusammenfassung; Figuren 1,2 * | 1-4,14 | |
| A | FR-A-2 303 268  (JAPANESE NATIONAL RAILWAYS) <br> * Anspruch 1; Figur 1 * | 12,23 | **RECHERCHIERTE SACHGEBIETE (Int. Cl.5)** <br><br> G 01 B |

Der vorliegende Recherchenbericht wurde für alle Patentansprüche erstellt

| Recherchenort | Abschlußdatum der Recherche | Prüfer |
|---|---|---|
| BERLIN | 03-04-1990 | VORROPOULOS G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)